# EUROPÄISCHE PATENTANMELDUNG

(11) **EP 0 881 813 A2**
(43) Veröffentlichungstag der Anmeldung: **02.12.1998**
(21) Anmeldenummer: 98109680.3
(22) Anmeldetag: 26.05.1998
(51) Int. Cl.: H04M 7/00

(54) **Verfahren zur Abwicklung von Fernsprechverbindungen über wenigstens ein Fernsprechnetz unter Ausnutzung des Internet**

(30) Priorität: 27.05.1997 DE 19722152
(71) Anmelder: SIEMENS AKTIENGESELLSCHAFT, 80333 München (DE)
(72) Erfinder: Hollatz, Frank, 81377 München (DE); Schmidt, Christian, 86163 Augsburg (DE); Ungruh, Joachim, 80638 München (DE); Jugel, Alfred, 82538 Geretsried (DE); Bhavsar, Umesh, 82166 Gräfelfing (DE); Lindenthal, Andreas, 81247 München (DE); Lange, Thomas, 84034 Landshut (DE)

(57) **Zusammenfassung**

Vermittlungsstelle des rufenden Teilnehmers (LE11) und maßgebliche Internetübergabepunkte (IWU1, IWU2) werden vom selben Anbieter betrieben. Zugangsprüfung zum Voice-Over-Internet-Dienst und Vergebührung der Gesamtverbindung über Fernsprechnetz und Internet werden in der Vermittlungsstelle vorgenommen.

## Beschreibung

Die Erfindung betrifft ein Verfahren zur Abwicklung von Fernsprechverbindungen über wenigstens ein Fernsprechnetz unter Ausnutzung des Internet zwischen einem für den rufenden Teilnehmer maßgeblichen Netzübergangspunkt und einem für den gerufenen Teilnehmer maßgeblichen Netzaustrittspunkt.

Bei den Endgeräten, die bei solchen Verbindungen miteinander kommunizieren, kann es sich entweder um Fernsprechendgeräte oder aber um Datenendeinrichtungen in Form von Personal Computern handeln, die mit einer entsprechenden Telefonsoftware und mit Mikrofon und Lautsprecher ausgestattet sind.

Bei dieser Art von Telefonie, auch als 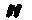 Voice Over Internet" (VOI) bekannt, sind bisher der Betreiber des Fernmeldenetzes und der Dienstleister, der die Übergangspunkte vom Fernsprechnetz in das Internet zur Verfügung stellt, unterschiedliche Anbieter.

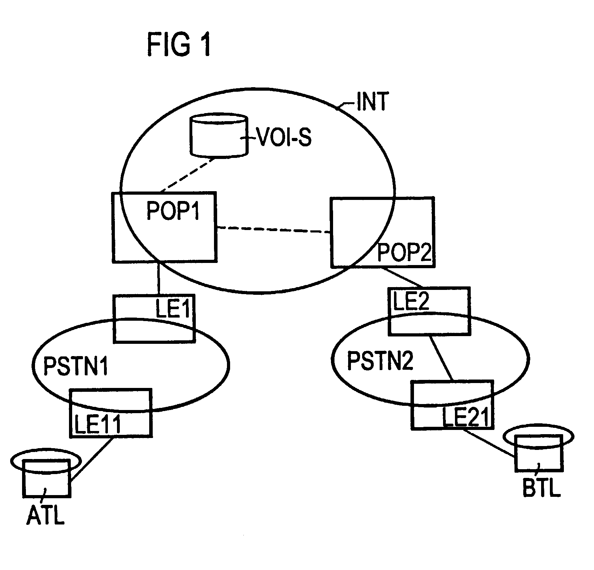

Anhand der Figur 1 wird erläutert, wie bisher solche VOI-Verbindungen abgewickelt werden. Es wird dabei die Verbindung eines rufenden Teilnehmers, eines sogenannten A-Teilnehmers mit einem Endgerät ATL, das an eine erste Ortsvermittlungsstelle LE1 angeschlossen ist, mit einem gerufenen Teilnehmer, einem sogenannten B-Teilnehmer mit einem Endgerät BTL betrachtet, das an eine andere Ortsvermittlungsstelle LE21 angeschlossen ist.

Beim dargestellten Beispiel gehören die erwähnten Ortsvermittlungsstellen Fernmeldenetzen PSTN1 bzw. PSTN2 an, die unterschiedlichen Betreibern gehören mögen, beispielsweise Fernsprechnetze in verschiedenen Ländern sind.

Bei den Teilnehmerendgeräten ATL und BTL möge es sich um Fernsprechendgeräte handeln. Es könnten jedoch auch die oben erwähnten Datenendgeräte sein, die, sofern sie im Telefonbetrieb arbeiten, durch die Vermittlungsstelle wie ein Fernsprechendgerät behandelt werden.

Bei beiden der Fernsprechnetze ist noch eine zweite Ortsvermittlungsstelle LE1 bzw. LE2 gezeigt, über die für die gezeigten Teilnehmerendgeräte ATL und BTL ein Zugang zum Internet INT möglich ist. Diese Vermittlungsstellen sind dementsprechend mit Netzüberangspunkten POP1 bzw POP2 verbunden, über die ein Zugang zu bzw. ein Austritt aus dem Internet erfolgt.

Die Betreiber der Fernsprechnetze PSTN1 und PSTN2 sind andere Anbieter als der Anbieter, der die gezeigten Netzübergangspunkte POP1 und POP2 zur Verfügung stellt.

Beim Aufbau einer VOI-Verbindung zwischen dem rufenden A-Teilnehmer und dem gerufenen B-Teilnehmer spielen sich bei den bisherigen Verhältnissen folgende Vorgänge ab:

Der A-Teilnehmer stellt von seinem Endgerät ATL aus durch entsprechende Wahl eine Fernsprechverbindung zu dem für ihn maßgeblichen Netzübergangspunkt POP1 her, die hier über die Ortsvermittlungsstellen LE11 und LE1 führt.

Es schließt sich nun ein interaktiver Dialog zwischen dem Teilnehmer und dem Netzübergangspunkt an, in dessen Verlauf der Teilnehmer zur Eingabe eines Authentifizierungscodes, gegebenenfalls zu Verrechnungszwecken seiner Kreditkartennummer und der Fernsprechnummer des gewünschten B-Teilnehmers aufgefordert wird. Nach erfolgter Authentifizierung wird dann unter Mitwirkung eines Internetservers VOI-S eine Internetverbindung zu dem für den B-Teilnehmer maßgeblichen Netzübergangspunkt, hier also zum POP2 hergestellt. Von diesem Netzaustrittspunkt POP2 aus erfolgt ferner die Herstellung einer weiteren Fernsprechverbindung zum Endgerät BTL im Fernsprechnetz PSTN2 über die Vermittlungsstellen LE2 und LE21. Im Zusammenhang mit einer Sprachübertragung über das Internet hat in den Netzübergangspunkten POP1 und POP2 eine Umwandlung der für eine Übertragung in durchgeschalteten Kanälen aufbereiteten Sprachinformationen in Datenpakete für die Internetübertragung bzw. eine entsprechende Rückwandlung stattzufinden.

Insbesondere wegen des erwähnten Dialogs zwischen A-Teilnehmer und Netzübergangspunkt und wegen der dabei erforderlichen Wählziffernübertragung kann ein solcher Verbindungsaufbau mehrere Minuten in Anspruch nehmen. Da andererseits nur der Zugang zum Internet gebührenpflichtig ist, kann eine solche VOI-Verbindung, insbesondere, wenn wie im vorliegenden Fall die Fernsprechnetze, zu denen die zu verbindenden Teilnehmer gehören, Netze in verschiedenen Ländern sind, von den Kosten her attraktiv sein. Im Fall der vorliegenden Verbindung wird der A-Teilnehmer einerseits vom Betreiber des Fernsprechnetzes PSTN1 mit einer Fernsprechgebühr für die Verbindung vom Teilnehmerendgerät ATL zum Netzübergangspunkt POP1 und andererseits durch den Anbieter der Netzübergangspunkte POP1 und POP2 in einer getrennten Rechnung mit einer pauschalierten Gebühr belastet, durch die für die Benutzung der Netzübergangspunkte sowie die Kosten der Fernsprechverbindung vom Netzübergangspunkt POP2 zum Endgerät BTL abgegolten werden, die der POP-Betreiber zu tragen hat. Auch wenn eine Verbindung nicht zustandekommt, weil der B-Teilnehmer besetzt ist oder nicht abhebt, fallen für den A-Teilnehmer die Fernsprechgebühren für die vorgenannte Verbindung von seinem Endgerät bis zum POP1 an.

Die Aufgabe der vorliegenden Erfindung besteht darin, die Abwicklung von Fernsprechverbindungen unter Ausnutzung des Internet für den rufenden Fernsprechteilnehmer komfortabler zu machen.

Diese Aufgabe wird durch ein Verfahren mit den Merkmalen des Patentanspruches 1 gelöst.

Es werden demnach zumindest das Fernsprechnetz, an dem der rufende Teilnehmer angeschlossen ist sowie die Netzübergangspunkte, die im Zusammenhang mit einer solchen VOI-Verbindung benutzt werden, vom selben Anbieter betrieben. Die Fernmeldevermittlungsstelle, von der aus über einen Netzübergangspunkt der Zugang zum Internet erfolgt und dieser Netzübergangspunkt kooperieren dabei in der Weise, daß in der Fernsprechvermittlungsstelle ein vom rufenden Teilnehmer im Falle einer gewünschten VOI-Verbindung zu wählendes Zusatzcodewort ausgewertet und eine Prüfung der Zugangsberechtigung des rufenden Teilnehmers zum Dienst VOI vorgenommen wird und erst im Falle einer festgestellten Berechtigung die vom A-Teilnehmer gewählte Fernsprechnummer des B-Teilnehmers an den Netzübergangspunkt weitergegeben wird. Von dort aus werden dann die weiteren Verbindungsaufbauprozeduren in der bisherigen Weise veranlaßt werden. Es wird ferner eine gemeinsame Vergebührung für die Fernsprechverbindung bis zum Netzübergangspunkt und für den von dort weiterführenden Teil der Verbindung vorgenommen, wobei wie auch bei üblichen Fernsprechverbindungen Gebühren erst dann anfallen, wenn die Verbindung tatsächlich zustandegekommen ist, der B-Teilnehmer sich also meldet.

Für den rufenden Teilnehmer entfallen also die umständlichen und zeitraubenden Prozeduren im Rahmen einer Kommunikation mit dem Netzübergangspunkt und auch für VOI-Verbindungen ist nur eine Fernmelderechnung erforderlich.

Weitere Ausgestaltungen der Erfindung sind in Unteransprüchen gekennzeichnet.

Im Anspruch 2 ist angegeben, wie die Kommunikation zwischen Fernsprechvermittlungsstelle und Netzübergangspunkt zweckmäßig gestaltet werden kann. Demnach wird in der Vermittlungsstelle, zu dessen Anschlußbereich der Netzübergangspunkt gehört, dieser als Mitglied einer geschlossenen Benutzergruppe behandelt, zu dem ein Zugang nur durch Wahl eines Zugangscodes durch den rufenden Teilnehmer möglich ist, wobei dieser Zugangscode nach einer Berechtigungsprüfung in die Zielnummer des Netzzugangspunktes umgewandelt wird.

Gemäß Anspruch 3 ist der Netzübergangspunkt mit der zugeordneten Fernsprechvermittlungsstelle in Form eines ISDN-Primäranschlusses verbunden und die Übertragung der Fernsprechnummer des rufenden Teilnehmers von der Fernsprechvermittlungsstelle an den Netzzugangspunkt erfolgt während des Verbindungsaufbaus im ISDN-D-Kanal.

Gemäß Anspruch 4 kann die Vergebührung von VOI-Fernsprechverbindungen zielabhängig, zeitabhängig oder in einer Mischform erfolgen.

Nachstehend wird das erfindungsgemäße Verfahren anhand eines Ausführungsbeispiels unter Bezugnahme auf eine Zeichnung noch näher erläutert.

In der Zeichnung zeigen:
Figur 1 das schon beschriebene Netzwerkszenario bei VOI-Verbindungen,
Figur 2 ein Netzwerkkonzept für VOI-Verbindungen mit Spezifizierung im Hinblick auf das erfindungsgemäße Verfahren.

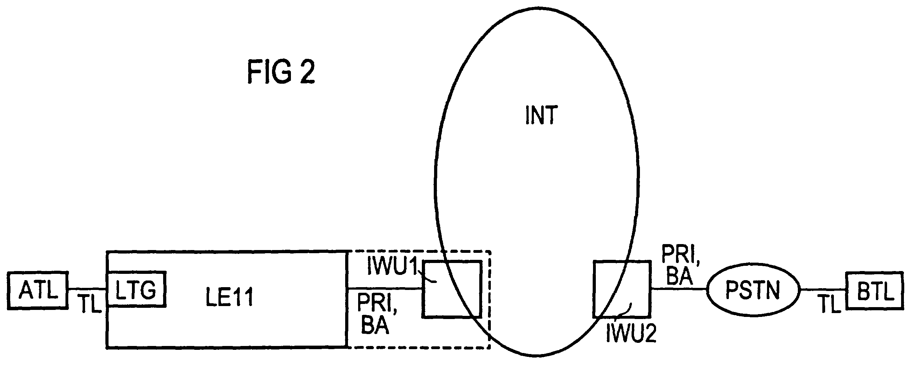

Bei der Darstellung gemäß Figur 2 ist vorausgesetzt, daß die Vermittlungsstelle LE11, an die das Fernsprechendgerät ATL des rufenden Teilnehmers angeschlossen ist und die zum Fernmeldenetz PSTN1 gehört, direkt mit einem Netzübergangspunkt verbunden ist. Diese Netzübergangspunkte, sind hier mit IWU1 und IWU2 bezeichnet. Bei Durchführung des erfindungsgemäßen Verfahrens haben im Zusammenhang mit einer VOI-Verbindung diese Übergangs- bzw. Austrittspunkte im wesentlichen nur noch die Umsetzung der im Fernsprechnetz kanalgebunden übertragenen Sprachinformationen in Datenpakete für die Übertragung im Internet INT bzw. den inversen Vorgang durchzuführen. Die Netzübergangspunkte sind wie auch bei der vorstehend beschriebenen Ausführungsform als ISDN-Anschlüsse z. B. ISDN-Primäranschluß (PRI) mit der betreffenden Vermittlungsstelle LE11 bzw. mit einer hier nicht dargestellten Vermittlungsstelle des Fernmeldenetzes PSTN2 verbunden, dem der B-Teilnehmer der betrachteten Verbindung angehört.

Es kann vorgesehen sein, daß die Netzübergangspunkte IWU1 bzw. IWU2 in die Vermittlungsstellen, mit denen sie in direkter Verbindung stehen, integriert sind.

Wenn nun also der A-Teilnehmer eine VOI-Verbindung zum B-Teilnehmer aufbauen möchte, wählt er einen Zugangscode für den Dienst VOI sowie die Fernsprechnummer des B-Teilnehmers beispielsweise in der Form *34*0015011234. In der Anschlußgruppe LTG, in die die mit dem Endgerät ATL verbindende Teilnehmeranschlußleitung TL mündet, wird aufgrund des Zugangscodes *34* der Ruf als VOI-Ruf erkannt und unter Berücksichtigung der Anschlußlage des A-Teilnehmers dessen Zugangsberechtigung festgestellt. Der Ruf wird daraufhin dynamisch als CUG-Ruf (Closed User Group) markiert. Im hier nicht dargestellten Koordinationsprozessor der Vermittlungsstelle LE11 wird in einem für VOI-Verbindungen eingerichteten Unterbaum die für eine Verbindung mit dem B-Teilnehmer zutreffende Gebührenzonentabelle angesteuert und die richtige Vergebührungszone ermittelt.

In der Anschlußgruppe LTG wird der Zugangscode *34* durch die Nummer des Netzzugangspunktes IWU1 ersetzt und die Fernsprechnummer des B-Teilnehmers während des Verbindungsaufbaus im D-Kanal des ISDN-Anschlusses zum Netzübergangspunkt IWU übertragen. Es schließen sich die Prozeduren zur Herstellung einer Internetverbindung mit dem für den B-Teilnehmer maßgeblichen Netzübergangspunkt und einer Fernsprechverbindung von dort zum B-Teilnehmer an. Sobald sich der B-Teilnehmer meldet, also die Verbindung zustandegekommen ist, beginnt dann in der Vermittlungsstelle LE11 die Gebührenzählung.

Es kann auch vorgesehen sein, die Gebühren wahrend des Rufs beim A-Teilnehmer anzuzeigen.

Eine VOI-Verbindung der beschriebenen Art ist von einem Analog-Fernsprechgerät, vom Fernsprechgerät eines ISDN-Anschlusses, von einem Personal Computer mit Telefonsoftware und entsprechender Hardwareausstattung sowie auch von einem Münzfernsprecher aus möglich.

## Patentansprüche

1. Verfahren zur Abwicklung von Fernsprechverbindungen unter Ausnutzung des Internet (IN) zwischen einem für den rufenden Teilnehmer maßgeblichen Netzübergangspunkt (IWU1) und einem für den gerufenen Teilnehmer maßgeblichen Netzübergangsspunkt (IWU2), bei dem zumindest das Fernmeldenetz (PSTN1), dem der rufende Teilnehmer (ATL) angehört, sowie die genannten Netzübergangspunkte vom selben Anbieter betrieben werden und bei dem ein Zugang eines rufenden Teilnehmers zum Netzübergangspunkt (IWU1) und die Weitergabe der gewählten Fernsprechnummer des gerufenen Teilnehmers (B-Teilnehmer) an den Netzübergangspunkt (IWU1) von der Kennzeichnung des Rufs als Internetfernsprechruf und vom Ergebnis einer Zugangsberechtigungsprüfung abhängig gemacht wird und bei der ferner eine solche Verbindung für die Benutzung des Fernsprechnetzes und des Internet gemeinsam und wie eine nur das Fernsprechnetz benutzende Verbindung erst bei deren Zustandekommen vergebührt wird.

2. Verfahren nach Anspruch 1, **dadurch gekennzeichnet**, daß die Zugangsprüfung zum für den rufenden Teilnehmer maßgeblichen Netzübergangspunkt (IWU1) zum Zwecke des Aufbaus einer Fernsprechverbindung in der Fernsprechvermittlungsstelle (LE11), zu deren Anschlußbereich der Netzübergangspunkt (IWU1) gehört, vorgenommen wird, wobei der Netzübergangspunkt als Mitglied einer geschlossenen Benutzergruppe behandelt wird, zu dem ein Zugang nur durch Wahl eines Zugangscodes durch den rufenden Teilnehmer möglich ist, wobei dieser Zugangscode nach einer Berechtigungsprüfung in die Zielnummer des Netzzugangspunktes (IWU1) umgewandelt wird.

3. Verfahren nach Anspruch 1 oder 2, **dadurch gekennzeichnet**, daß der genannte Netzübergangspunkt (IWU1) mit der zugeordneten Fernsprechvermittlungsstelle (LE11) in Form eines ISDN-Anschlusses verbunden ist, und daß die Übertragung der Fernsprechnummer des gerufenen Teilnehmers an den Netzübergangspunkt (IWU1) während des Verbindungsaufbaus im ISDN-D-Kanal erfolgt.

4. Verfahren nach einem der vorhergehenden Ansprüche, **dadurch gekennzeichnet,** daß die Vergebührung der Fernsprechverbindungen ziel- und/oder zeitabhängig erfolgt.
